# EUROPEAN PATENT APPLICATION

(11) **EP 2 743 236 A1**
(43) Date of publication of application: **18.06.2014**
(21) Application number: 12822902.8
(22) Date of filing: 08.08.2012
(51) Int. Cl.: C03B 11/08, G02B 3/00

(54) **MICROLENS ARRAY MOLDING DIE, METHOD FOR MANUFACTURING SAME, AND MICROLENS ARRAY**

(30) Priority: 09.08.2011 JP 2011173582
(71) Applicant: Asahi Glass Company, Limited, Tokyo 100-8405 (JP)
(72) Inventor: HORIUCHI, Kohei, Tokyo 100-8405 (JP); HASHITANI, Naoki, Tokyo 100-8405 (JP); HIRANO, Naomi, Tokyo 100-8405 (JP)
(74) Representative: Müller-Boré & Partner Patentanwälte PartG mbB
(86) International application number: PCT/JP2012/070258
(87) International publication number: WO 2013/022042

(57) **Abstract**

The present invention provides a microlens array molding die capable of manufacturing a microlens array having a shape relieving the stress concentration, a method for manufacturing the same, and a microlens array. The method for manufacturing a microlens array molding die of the present invention contains: forming a plurality of concave molding surfaces 2a on a surface of a plate-shaped material 11; and subsequently jetting abrasive particles 14 to make them collide against a molding die surface having the molding surfaces 2a, the abrasive particle 14 containing an elastic core body having a diameter greater than that of the molding surfaces and abrasive grains adhered to the surface of the elastic core body, thereby polishing the molding die surface.

## Description

### TECHNICAL FIELD

The present invention relates to a microlens array molding die, a method for manufacturing the same, and a microlens array. More specifically, the present invention relates to a microlens array molding die in which a marginal part of a molding surface thereof is formed of a curved surface, a method for manufacturing the same, and a microlens array obtained by using the molding die.

### BACKGROUND ART

A microlens for use in an image sensor of a digital camera, a liquid crystal projector, a laser projector for optical communication, and the like is usually employed in the form, so-called microlens array, in which a plurality of microlenses are arranged in a grid pattern or the like.

The microlens array is obtained by sandwiching a glass material for molding between an upper die formed by arranging a plurality of concave surfaces corresponding to the microlens on a mold surface and a lower die whose molding surface is made flat and pressing the glass material to transfer a plurality of the arranged microlens shapes by one molding operation.

The molding surface of the upper die used here is formed as a concave surface corresponding to the microlens by pressing a surface of a plate-shaped material, which is to be used as the molding die, with a punching tool having a spherical tip or by machining the surface of the material spherically (see, e.g., Patent Document 1).

### BACKGROUND ART DOCUMENTS

### PATENT DOCUMENTS

Patent Document 1: JP-A-H11-277543

### SUMMARY OF THE INVENTION

### PROBLEMS THAT THE INVENTION IS TO SOLVE

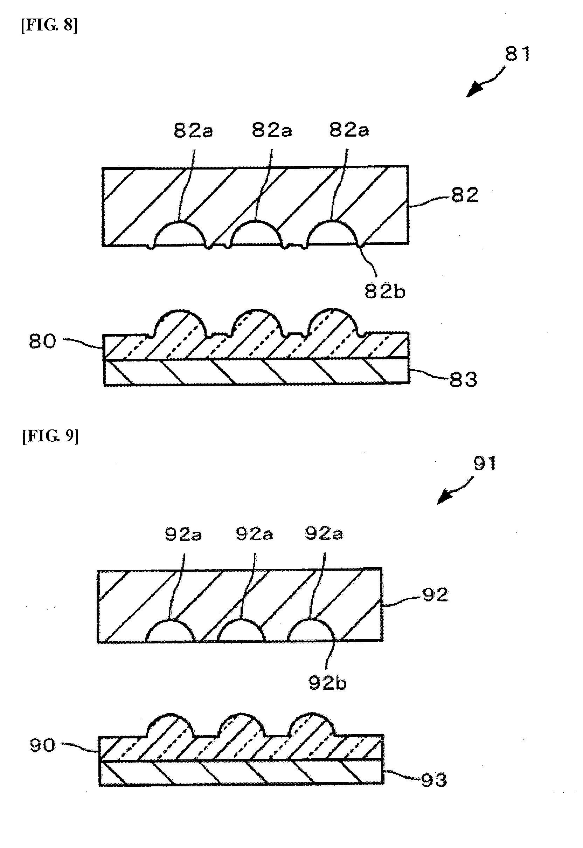

However, in the processing with a punching tool, since the molding surface is formed by pressing the tip of the punching tool onto a surface of a plate-shaped material as shown in Fig. 8, a bump resulting from plastic deformation of the pressed material is formed around a concave molding surface 82a to be formed on the forming die 82 (see 82b in Fig. 8).

In the processing by machining, since a molding surface part of the plate-shaped material is scraped off, the bump of the material as in the case of using the punching tool is not formed but burrs are generated around the processed surface and thus the processed surface cannot be used for lens molding as it is, so that polishing for burr removal is needed. Usually, chemical mechanical polishing (CMP) is used for the polishing for burr removal but in this technique, an edge is formed at the connection part between the concave molding surface 92a of the obtained molding die 92 and the molding die surface as shown in Fig. 9 (see 92b in Fig. 9).

As described above, when a bump or a sharp edge is present around the molding surface, a shape thereof is also to be transferred to the microlens to be molded (see microlens array 80 in Fig. 8 and microlens array 90 in Fig. 9). At the time, since concave grooves or edge parts are formed on the periphery of the individual molded microlenses, there is prone to occur such a trouble that stress concentration is generated around the lens to crack and break the lens during molding or use of the microlens, so that there is a problem of decreasing the yield.

Accordingly, the present invention is devised for solving such a problem and an object of the present invention is to provide a microlens array molding die exhibiting an improved production yield by making a microlens array have a shape relieving the stress concentration in the production of the microlens array and a method for manufacturing the same, and a microlens array in which the stress concentration is relieved.

### MEANS FOR SOLVING THE PROBLEM

The method for manufacturing a microlens array molding die according to the present invention contains: forming a plurality of concave molding surfaces on a surface of a plate-shaped material; and subsequently jetting abrasive particles to make the abrasive particles collide against a molding die surface having the molding surfaces, the abrasive particle containing an elastic core body having a diameter greater than that of the molding surfaces and abrasive grains adhered to the surface of the elastic core body, thereby polishing the molding die surface.

The microlens array molding die according to the present invention is characterized in that a connection from the concave lens molding surface to the molding die surface is formed of a curved surface.

The microlens array according to the present invention is obtained by using the microlens array molding die of the present invention.

### EFFECT OF THE INVENTION

According to the method for manufacturing a microlens array molding die of the present invention, a microlens array molding die in which the concave lens molding surface and the molding die surface are connected by a curved shape without edges in the connection can be produced. A microlens array molded by using the microlens array molding die obtained as above can suppress the generation of stress concentration owing to the absence of concaves or edge parts around lens surfaces, so that the generation of lens cracks and the like can be prevented. Therefore, the microlens array molding die of the present invention can improve the production yield of the microlens array.

### BRIEF DESCRIPTION OF THE DRAWINGS

[Fig. 1] Fig. 1 shows (a) a cross-sectional side view and (b) an enlarged view of the lens molding surface of the microlens array molding die that is one embodiment of the present invention.
[Fig. 2] Fig. 2 is a drawing explaining shapes of a lens molding surface and marginal parts.
[Fig. 3] Fig. 3 is a drawing explaining a method for manufacturing the microlens array molding die of Fig. 1.
[Fig. 4] Fig. 4 is a drawing explaining a method for reducing deflection of polishing by changing the polishing direction in the polishing of (c) of Fig. 3.
[Fig. 5] Fig. 5 is a drawing explaining a method for molding a microlens array by using the microlens array molding die of Fig. 1.
[Fig. 6A] Fig. 6A is a plane view of the microlens array molding die in Example 1 of the present invention before polishing.
[Fig. 6B] Fig. 6B is a plane view of the microlens array molding die in Example 1 of the present invention after polishing.
[Fig. 7A] Fig. 7A is a drawing showing a cross-sectional shape of the microlens array molding die in Example 1 of the present invention before polishing.
[Fig. 7B] Fig. 7B is a drawing showing a cross-sectional shape of the microlens array molding die in Example 1 of the present invention after polishing.
[Fig. 8] Fig. 8 is a drawing showing cross-sectional shapes of the molding surfaces molded by a conventional punching tool and lens shapes molded by using the same.
[Fig. 9] Fig. 9 is a drawing showing cross-sectional shapes of the molding surfaces molded by conventional machining and burr removal and a lens shape molded by using the same.

### MODE FOR CARRYING OUT THE INVENTION

The following will explain the present invention with reference to drawings.

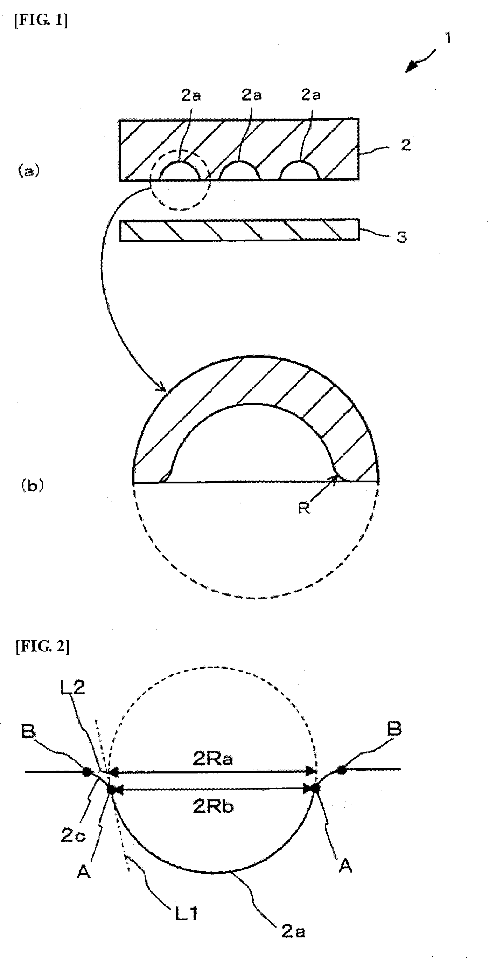

Here, Fig. 1 is a cross-sectional side view of the microlens array molding die that is one embodiment of the present invention. This figure is shown with simplifying the number of the concave holes in order to explain schematic constitution of the molding die.

The microlens array molding die 1 shown in (a) of Fig. 1 is composed of an upper die 2 and a lower die 3, and a plurality of concave molding surfaces 2a for lens molding are provided on the lower surface of the upper die 2. Here, a specific shape of the concave molding surface 2a may include an aspherical surface, a spherical surface, and a surface having the other shape. Also, in the case where the molding surface 2a has a spherical shape, the shape is expressed as a concave spherical shape and, hereinafter, the molding surface is explained as a concave spherical molding surface 2a.

Here, the upper die 2 is a flat molding die having a plurality of concave spherical molding surfaces 2a for lens molding on the lower surface of the die. The concave spherical molding surfaces 2a are provided with arranging them in a grid pattern and each one of them has a circular opening corresponding to the size of one microlens to be molded. In this regard, the layout of the microlenses may be formed to be any known layout such as a staggered layout, in addition to the grid pattern one.

Moreover, the concave spherical molding surface 2a transfers and molds a shape of one microlens as it is and has a concave spherical shape corresponding to the lens shape. The concave spherical molding surface 2a preferably has an opening size of the concave spherical shape to be formed being from 30 to 1,000 µm, and is more preferably a hemisphere concave shape whose opening size is about twice the radius of curvature of the molding surface 2a. At the time, when the molding surface 2a is made hemisphere concave shape, the radius of curvature of the molding surface 2a is the same in size as the radius (maximum depth) of a processing sphere forming the molding surface 2a.

Moreover, the pitch between the concave spherical molding surfaces 2a is from 30 to 5,000 µm, and the ratio represented by (diameter/pitch) of the concave spherical hole is from 0.1 to 1, and preferably from 0.2 to 0.9. At the time, it is preferable that the effective diameter of the microlens is 80% or more relative to the diameter of the molding surface 2a. In this regard, the pitch between the concave spherical molding surfaces 2a corresponds to the distance between the centers of the openings of neighboring molding surfaces 2a.

The molding surface 2a is formed so that the connection from the molding surface to the surface of the upper die 2 provides a curved surface. The connection part between the molding surface 2a and the surface of the upper die 2 is expressed as a marginal part. In this regard, the surface of the upper die 2 and the molding die surface correspond to the surface between the molding surfaces 2a. The curved surface of the marginal part may be appropriately formed so that the curved surface has a curvature depending on the radius of curvature of the molding surface 2a and such that stress concentration is not generated. For example, in the case where the radius of curvature of the molding surface 2a is 50 µm (diameter: 100 µm), the radius of curvature of the marginal part is preferably from 10 to 40 µm and more preferably from 12 to 38 µm. In the case where the radius of curvature of the molding surface 2a is 25 µm (diameter: 50 µm), since the radius of curvature is one-half, the radius of curvature of the marginal part is preferably from 5 to 20 µm and more preferably from 6 to 19 µm.

Moreover, the relationship between the radius of curvature of the molding surface 2a and the radius of curvature of the marginal part is explained with reference to Fig. 2. Fig. 2 is a cross-sectional side view of the lens molding surface and, in Fig. 2, the radius of curvature of the processing sphere corresponding to the molding surface 2a is taken as Ra and the radius of curvature of the curved marginal part 2c is taken as R. At the time, R/Ra ranges preferably from 0.2 to 0.8 and more preferably from 0.24 to 0.76. In this regard, the radius of curvature Ra of the molding surface 2a corresponds to the radius of curvature of the sphere shown by the dotted line in Fig. 2, i.e., the processing sphere, and the portion coincident to the surface of the processing sphere may be said, in different words, to be the molding surface 2a. In addition, the end part of the molding surface 2a is taken as A, and a tangent line passing through A is taken as L1. The end part of curved surface of the marginal part 2c, i.e., the boundary part with the flat surface of the upper die 2 is taken as B, and a tangent line passing through B is taken as L2. Here, the radius of curvature of the circle inscribed in the tangent line L1 and the tangent line L2 can be defined as R. Moreover, when the effective diameter of the processing sphere whose end part provides A is taken as 2Rb, Rb/Ra is preferably 80% or more and more preferably 90% or more.

As above, in the case where the surface from the molding surface to the molding die surface is formed of a curved surface, since there does not exist an edge (edge part) whose angle sharply changes, the surface of the microlens array obtained by using such a microlens array molding die (upper die 2) is also formed of a smooth surface to which the curved surface has been transferred and stress concentration in the obtained microlens array is hardly generated. Thereby, troubles such as generation of cracks in the microlens array can be prevented even during the production and after the production and thus the production yield can be improved.

The lower die 3 is a flat molding die and an upper surface thereof carries a glass material for molding and has a function of flattening one surface of the microlens at pressing, and the molding die surface is also smooth and a flat surface.

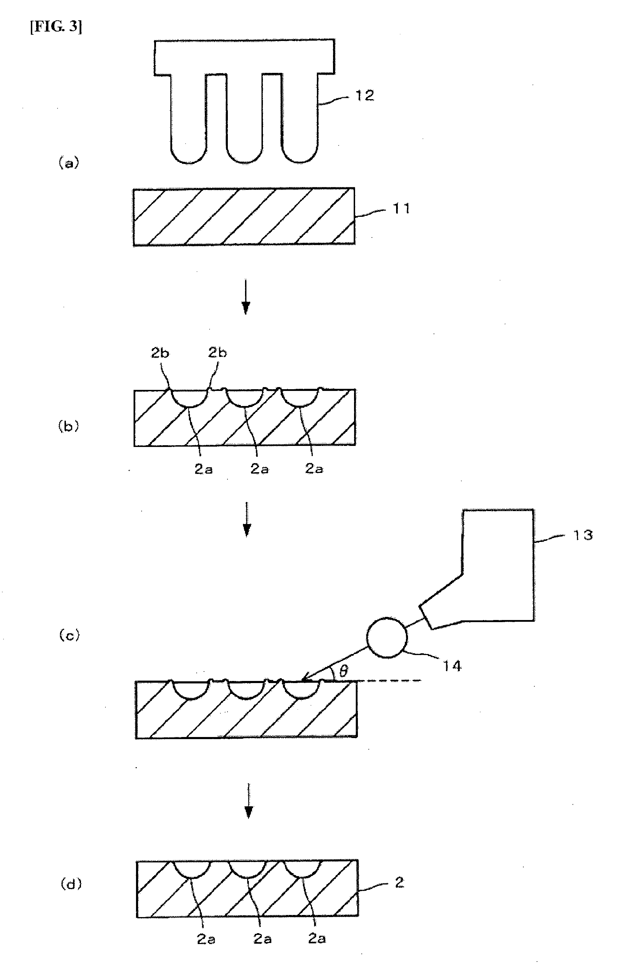

Next, the method for manufacturing a microlens array molding die of the present invention will be explained with reference to Fig. 3. The above-described microlens array molding die 1 is characterized in how the upper die 2 having the molding surface is produced. The following will explain the method for manufacturing the upper die 2.

First, a flat molding die material 11 is prepared as a plate-shaped material for forming the upper die 2. Then, a punching tool 12 for forming a molding surface on the molding die material 11 is positioned depending on the molding surface to be formed ((a) of Fig. 3). In this regard, as for the molding die material 11 prepared here, a material known as a molding die of microlens array, such as stainless steel or cemented carbide, can be used as the material and it is sufficient that the hardness HRC is 80 or less. In this regard, in the case of considering easiness of processing, HRC is preferably from 10 to 70. Here, HRC is a numerical value showing hardness of a material and is a value calculated from an indentation quantity when a diamond cone having a tip radius of 0.2 mm and a point angle of 120° is used and a force of 1,470 N is applied.

When the positioning has been completed, the punching tool 12 is pressed onto the molding die material 11 to transfer the tip shape of the punching tool 12 to the molding die material 11 ((b) of Fig. 3). At the time, the periphery of the molding surface 2a is distorted by the degree pressed with the punching tool 12 and, in general, outer circumference of the opening of the molding surface 2a bumps and a convex part 2b is formed on the molding die surface.

When a microlens array is formed while the convex part 2b is present as above, a concave part is formed on the periphery of the microlens as shown in Fig. 8 also explained in the conventional technology. The concave part causes troubles such as the generation of cracks in the microlens array.

Accordingly, in the present invention, in order to remove the convex part 2b, polishing of the molding die surface is performed to remove the convex part 2b, and also polishing is performed as follows so as to form a marginal part connecting the molding surface 2a and the molding die surface with curvature. In this regard, since the molding die surface is also polished at the time of polishing and the depth of the molding die surface 2a varies before and after the polishing, for obtaining a desired molding surface 2a, it is appropriate to determine pressing depth by the punching tool 12 depending on the polishing amount.

The polishing to be used at this time can be achieved by the method of jetting abrasive particles 14 by a polishing apparatus 13 to make the abrasive particles collide against the surface, which has the molding surfaces 2a, of the upper die 2, in which the abrasive particle 14 has a diameter greater than the maximum diameter of the concave spherical molding surfaces 2a before polishing, which has been formed by the punching tool 12 ((c) of Fig. 3).

In this polishing method, the abrasive particles 14 each having abrasive grains on the surface thereof are jetted together with a gas such as air and the abrasive particles are made collide against the molding die surface on which the molding surfaces have been formed to polish the molding die surface and simultaneously to polish the marginal part of the concave spherical molding surfaces 2a so as to form a marginal part connecting the molding surface and the molding die surface as a smooth curved surface ((d) of Fig. 3).

The abrasive particle 14 to be used at the time contains an elastic core body having elasticity and abrasive grains adhered to the surface of the elastic core body. The abrasive particle 14 has a shape having a diameter greater than the opening size of the concave spherical molding surfaces 2a before polishing, which has been formed by the punching tool 12. In this regard, the same shall apply in the case where the concave spherical molding surfaces are formed not by the punching tool but by machining. As above, by making the diameter of the abrasive particle 14 larger than the opening size of the concave spherical molding surfaces 2a before polishing, penetration of the abrasive particle 14 into the concave spherical parts can be suppressed and thus the grinding particles can be prevented from coming into contact with the molding surfaces 2a to damage the surfaces. At the time, for example, it is preferable that the diameter of the abrasive particle 14 is set from 2 to 50 times the opening size of the molding surfaces 2a before polishing.

Moreover, in the case where the radius of the abrasive particle 14 is controlled to be larger than the radius of curvature of the spherical shape of the molding surfaces 2a (in the case where the punching tool 12 is used, the radius of processing sphere of the tip part of the punching tool 12), the penetration of the abrasive particle 14 into the concave spherical parts can be surely prevented and hence the case is preferable.

Here, the elastic core body of the abrasive particle 14 is a particle having elasticity. Since the core body has elasticity, the surface to be polished is prone to be smoothly processed at the time when the abrasive particle 14 collides against the article to be polished. In the present invention, the marginal part that is a connecting part between the molding surfaces 2a and the molding die surface is easily formed into a shape having curvature. Furthermore, the shape of the elastic core body is preferably almost spherical so that the surface to be polished can be smoothly processed. In this regard, almost spherical means a shape that is visually observed to be spherical.

It is sufficient that the elastic core body has elasticity and examples thereof include rubbers, plant fibers, resins, gelatin, and the like. Of these, preferred are a plant fiber, gelatin, and the like which have a property that pressure-sensitive adhesiveness is generated by the incorporation of water. The size of the elastic core body is almost the size of the abrasive particle and a core body having a diameter of about 0.5 to 2.0 mm is preferable in the present invention.

Moreover, although plant fibers, gelatin, and the like exert desired properties such as pressure-sensitive adhesiveness through the simultaneous incorporation of water, the temperature of the abrasive particle 14 and the article to be polished is raised and water is vaporized as the polishing operation is continued, so that it is preferable to simultaneously incorporate a component that suppresses the water vaporization. For example, a substance to be incorporated in the case of using gelatin as the core body includes ethylene glycol, sorbitol, or the like.

The abrasive grains include known abrasive grains such as diamond, silicon carbide, and alumina. The grain size of the abrasive grains used in the present invention is preferably from 3,000 to 20,000 mesh, and a plurality of the abrasive grains are evenly adhered to the surface of the core body.

Then, the abrasive particles 14 as described above are jetted and the abrasive particles 14 are made collide against the surface on which molding surfaces of the molding die have been formed to perform polishing. The abrasive particles after polishing are collected and may be again charged into the injection apparatus and reused.

The pressure for jetting the abrasive particles 14 may be in a range of 0.1 to 1.5 MPa and is preferably from 0.5 to 0.8 MPa. Moreover, as for a collision angle θ at the jetting, the collision may be performed, for example, at an angle of 10 to 80° on the basis of the surface direction of the molding die so that the abrasive particle 14 can repeat sliding on the molding die surface. The angle is preferably from 30 to 60°.

Furthermore, by appropriately controlling the above jetting pressure and collision angle, the material of the molding die and the kind of the abrasive particle, the polishing time, and the like, a polishing amount of the molding die surface and the curved shape of the marginal part that is a connection part can be controlled to form a desired shape. At the processing of the molding die into the desired shape, polishing time is preferably from about 30 to 240 seconds in view of processing efficiency.

Additionally, in the present invention, it is preferable to perform the polishing with changing the direction at an equal angle on a plane parallel to the molding die surface for an equal time at each time of polishing, so as not to generate deflection of the molding die shape per polishing direction. This is because the marginal part of the molding surface 2a at the deep side in the polishing direction is easily polished as compared with the marginal part at the front side or at the lateral side because a concave spherical pocket that is the molding surface 2a is present on the surface to be polished.

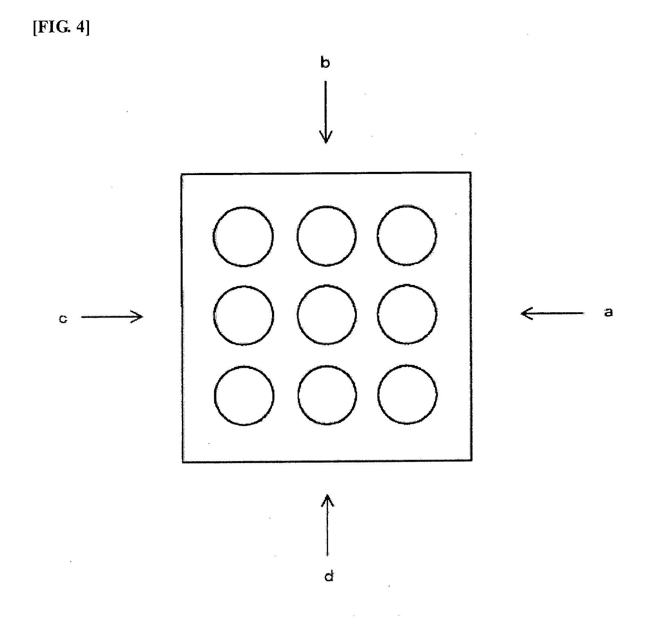

At this time, the polishing directions are preferably three directions or more, more preferably four directions or more, and particularly preferably six directions or more. Moreover, in this case, the polishing directions are preferably positioned at intervals of an appropriately equal angle. When the number of the polishing directions is taken as N and the interval of the angle is taken as Δφ [°], the interval of an appropriately equal angle is,
preferably 0.8×360/N≤Δφ≤1.2×360/N,
more preferably 0.9×360/N≤Δφ≤1.1×360/N.
However, the deflection per direction decreases as the polishing directions increases and therefore structurally-preferable one can be obtained but, since the polishing time increases when the polishing directions increases, it is appropriate to determine in consideration of a balance of the shape of the molding die and the polishing efficiency. Fig. 4 is a top view showing the surface of the upper die 2 at the molding surface side and shows the case where the polishing directions are four directions with rotating the jetting direction by 90° each as represented by a, b, c, and d on the plane of the upper die surface.

The following will explain a method for molding a microlens array, using the above molding die.

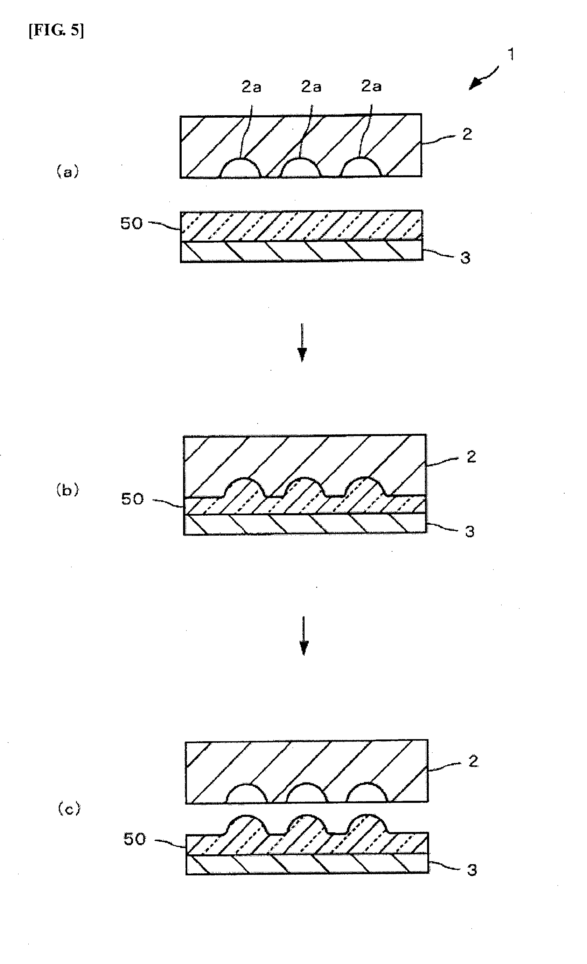

First, a glass material 50 is placed on the lower die 3 of the microlens array molding die 1 of Fig. 1 ((a) of Fig. 5).

Then, the upper die 2 and the lower die 3 are heated to molding temperature and the glass material 50 is also heated to the same temperature, thereby softening it. The heating temperature at the time is appropriately a temperature at which the glass material 50 is softened and, although it varies depending on the used glass material, is generally from about 500 to 1,100°C. At the time, it is sufficient that the viscosity of the glass is controlled to be from 1×10⁴ to 1×10⁹ [dPa·s] and, for performing the molding operation smoothly, is preferably from 1·10⁵ to 1×10⁷ [dPa·s].

Next, the upper die 2 is lowered from the above of the glass material 50 that has been sufficiently heated to be in a softened state and the glass material is sandwiched with the lower die and the upper die and pressed. The glass at the molding surface 2a parts of the upper die 2 is pushed up in spherical shapes and the shapes of the molding surfaces 2a are transferred to form microlenses ((b) of Fig. 5). At the time, it is preferable that pressing pressure is from 0.1 to 100 MPa and pressing time is from 10 to 600 seconds. Moreover, the molding is performed in a state heated to high temperature and, for preventing deterioration of the molding die by oxidation, is conducted under vacuum conditions of, for example, 1×10⁻² Pa or lower or in an atmosphere of an inert gas such as nitrogen or argon.

After pressing, the upper die 2 is elevated ((c) of Fig. 5) and the molded glass material is cooled and solidified to obtain a microlens array. As above, a microlens array in which spherical microlenses are arranged in a grid pattern at equal intervals from neighboring microlenses is obtained. In the case where the coefficient of thermal expansion of the material of the upper die 2 and coefficient of the thermal expansion of the glass material are about the same, cooling and solidification may be performed in a state that the upper die 2 is pressed and thereafter, the upper die 2 may be elevated to obtain the microlens array. Since the microlens array obtained by this production method uses the microlens array molding die 1, no edge is present around the microlens and the marginal part is connected by a curved surface, so that the microlens array does not generate stress concentration in various scenes and thus is a product excellent in stability.

Incidentally, the glass material 50 to be used is not particularly limited as long as the microlens array can be produced, and it can be used a glass material for molding which is conventionally used for a microlens array. For example, the glass material 50 includes rectangular or circular flat ones and, at the time, thickness before pressing is from 1 mm to 30 mm. In addition, as the glass material, it can be used not only the above flat ones but also variously shaped ones, for example, spherical ones and flattened ones in which spherical shape is pressed.

### EXAMPLES

The following will explain the present invention in further detail with reference to Examples.

### (Example 1)

First, as a molding die material 11, a material of φ16×t7.5 mm was prepared, which was composed of a stainless steel (manufactured by Uddeholm, trade name: STAVAX; coefficient of thermal expansion α: 115×10⁻⁷/K (at 300°C), HRC: 30) and whose surface was coated with Ir-Re. Then, a punching tool 12 whose tip shape had R of 22.5 µm was pressed onto the material to form 30x30 pieces of molding surfaces 2a each having a maximum diameter of the opening of 45 µm in a grid pattern with a pitch of 100.5 µm. Incidentally, in consideration of subsequent polishing, the depth of the molding surface 2a was set 30 µm.

Thereafter, abrasive particles were jetted to the molding die surface, on which the molding surfaces 2a had been formed, at an air pressure of 0.5 MPa for 120 seconds so that the collision angle θ became 40° on the basis of the plane direction of the molding die surface. The surface of the upper die 2 and the convex parts 2b of marginal parts of the molding surfaces were polished so that polishing was performed from four directions by rotating by 90° each on a plane parallel to the molding die surface as shown in Fig. 4.

The abrasive particles used here were obtained by blending 100 g of spherical gelatin particles each having a size of 0.5 mm, 2 g of diamond particles having a grain size of 3,000 mesh, 5 g of silicon carbide, 5 g of alumina, and 20 g of water in this ratio and mixing them for 15 minutes to fix the diamond particles onto the surface of the gelatin particles containing water. At this time, water is contained in a ratio of about 18% in terms of mass in the obtained abrasive particles.

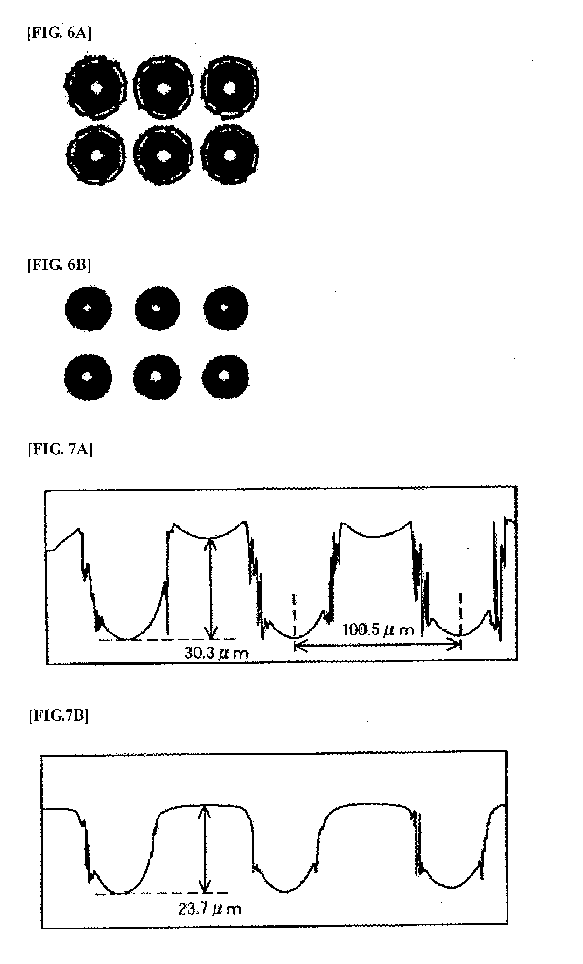

With regard to a part of the microlens array molding die, a top view thereof before polishing was shown in Fig. 6A, a top view thereof after polishing was shown in Fig. 6B, molding surface shapes before polishing were shown in Fig. 7A, and molding surface shapes after polishing were shown in Fig. 7B. Here, the top views and the molding surface shapes were obtained on a laser microscope (manufactured by KEYENCE, trade name: VK9700).

Before polishing in Fig. 6A, a state of the presence of a bump around the processed part is observed but, after polishing in Fig. 6B, a state of disappearance of the bump around the processed part is observed. Fig. 7A and Fig. 7B show results of the measurement of a cross-section passing through surface tops of three cells. In Fig. 7A before polishing, the depth was 30.3 µm since processing was performed with taking the bump into account. However, in Fig. 7B after polishing, the bump disappeared and the depth was 23.7 µm, so that almost desired results were obtained.

The obtained microlens array had a hemisphere molding surfaces of processing sphere having a diameter of 45 µm. An average value of the depth of the molding surfaces 2a was 23.7 µm, an effective diameter of the molding surface was 40.5 µm, a radius of curvature R of the marginal part was 9.8 µm, and the molding surfaces and the molding die surface are connected through smooth curved surfaces.

By using the microlens array molding die thus obtained, a microlens array was molded by the following operation.

An upper die having a molding surface shape obtained by the above-described method was used as the upper die, and a flat lower die whose surface facing to the upper molding surface was a smooth plane was used as the lower die.

A biconvex glass material having a diameter of 14 mm and a height of 7 mm (manufactured by Asahi Glass Co., Ltd., trade name: A-BAR12; coefficient of thermal expansion α: 91×10⁻⁷/K (at 300°C)) was placed on the lower die, the upper and lower molding dies were heated to 560°C, and the glass material was also heated to the same temperature and softened. The viscosity of the glass at the time was about 1×10⁹ [dPa·s].

The upper die was lowered from the above of the glass material which had been sufficiently heated and had been in a soften state, and the glass material was sandwiched with the lower die and the upper die and pressed under a pressure of 0.4 MPa for a pressing time of 90 seconds. At the time, the pressing atmosphere was a vacuum condition of 1.0×10⁻³ Pa.

The upper die was elevated and the pressed glass material 50 was cooled and solidified to obtain a microlens array in which spherical microlenses having φ45 µm were arranged in a grid pattern with a pitch of 100.5 µm.

The periphery of microlenses of the obtained microlens array was formed of curved surfaces and had a desired shape. According to the present invention, stress concentration of the microlens array during molding and during use can be relieved and thus production yield can be satisfied.

### INDUSTRIAL APPLICABILITY

The microlens array molding die and the method for manufacturing a microlens array of the present invention are used for the production of a microlens array by press molding.

While the present invention has been described in detail and with reference to specific embodiments thereof, it will be apparent to one skilled in the art that various changes and modifications can be made therein without departing from the spirit and scope thereof.

The present application is based on Japanese Patent Application (No. 2011-173582) filed on August 9, 2011, and the entire contents are incorporated herein by reference.

### DESCRIPTION OF REFERENCE NUMERALS AND SIGNS

1 ... Microlens array molding die, 2 ... Upper die, 2a ... Molding surface, 2b ... Convex part, 3 ... Lower die, 11 ... Material of molding die (plate-shaped material), 12 ... Punching tool, 13 ... Polishing apparatus, 14 ... Abrasive particle, 50 ... Glass material

## Claims

1. A method for manufacturing a microlens array molding die, the method comprising:
forming a plurality of concave molding surfaces on a surface of a plate-shaped material and
subsequently jetting abrasive particles to make the abrasive particles collide against a molding die surface having the molding surfaces, the abrasive particle comprising an elastic core body having a diameter greater than that of the openings of the molding surfaces and abrasive grains adhered to the surface of the elastic core body, thereby polishing the molding die surface.

2. The method for manufacturing a microlens array molding die according to claim 1, wherein the elastic core body comprises a rubber, a plant fiber, a resin, or gelatin.

3. The method for manufacturing a microlens array molding die according to claim 2, wherein the elastic core body comprises gelatin and water.

4. The method for manufacturing a microlens array molding die according to any one of claims 1 to 3, wherein the opening size of the molding surface is from 30 to 1,000 µm.

5. The method for manufacturing a microlens array molding die according to any one of claims 1 to 4, wherein the abrasive particle has a shape of almost spherical shape.

6. The method for manufacturing a microlens array molding die according to any one of claims 1 to 5, wherein the abrasive particle has a diameter of from 2 to 50 times the opening size of the molding surface.

7. The method for manufacturing a microlens array molding die according to any one of claims 1 to 6, wherein the abrasive particle has a radius larger than the radius of curvature of the molding surface.

8. The method for manufacturing a microlens array molding die according to any one of claims 1 to 7, wherein the abrasive particles are jetted to make the particles collide against the molding die surface at an angle of 10 to 80° in the polishing of the molding die surface.

9. The method for manufacturing a microlens array molding die according to any one of claims 1 to 8, wherein polishing is performed from three or more directions with changing the direction at intervals of an approximately equal angle on a plane parallel to the molding die surface in the polishing of the molding die surface.

10. A microlens array molding die, wherein a marginal part that is a connection part from the concave lens molding surface to the molding die surface is formed of a curved surface.

11. The microlens array molding die according to claim 10, wherein, when the radius of curvature of the lens molding surface is taken as Ra and the radius of curvature of the marginal part is taken as R, R/Ra is from 0.2 to 0.8.

12. The microlens array molding die according to claim 11, wherein the radius of curvature of the marginal part R is from 5 to 20 µm.

13. A microlens array obtained by using the microlens array molding die described in any one of claims 10 to 12.
